# EUROPÄISCHE PATENTSCHRIFT

(11) **EP 1 089 909 B1**
(45) Veröffentlichungstag und Bekanntmachung des Hinweises auf die Patenterteilung: **30.06.2004**
(21) Anmeldenummer: 00938474.4
(22) Anmeldetag: 05.04.2000
(51) Int. Cl.: B65B 3/28

(54) **VORRICHTUNG ZUM DOSIEREN UND ABFÜLLEN EINER FLÜSSIGKEIT IN VERPACKUNGSBEHÄLTER**
DEVICE FOR DOSING AND FILLING A LIQUID INTO PACKAGING CONTAINERS
DISPOSITIF POUR LE DOSAGE ET LE REMPLISSAGE D'UN LIQUIDE DANS DES RECIPIENTS D'EMBALLAGE

(30) Priorität: 17.04.1999 DE 19917441
(43) Veröffentlichungstag der Anmeldung: 11.04.2001
(73) Patentinhaber: ROBERT BOSCH GMBH, 70442 Stuttgart (DE)
(72) Erfinder: MAYER, Werner, D-74599 Wallhausen (DE); BOERTZ, Detlef, D-74523 Schwäbisch Hall (DE)
(86) Internationale Anmeldenummer: PCT/DE2000/001101
(87) Internationale Veröffentlichungsnummer: WO 2000/063076

(56) Entgegenhaltungen:
- EP-A- 0 430 897
- EP-A- 0 720 562
- FR-A- 2 341 136
- US-A- 3 933 272

## Beschreibung

Die Erfindung betrifft eine Vorrichtung zum Dosieren und Abfüllen einer Flüssigkeit in Verpackungsbehälter nach dem Oberbegriff des Anspruchs 1, wie sie aus der EP 0 720 562 B1 bekannt ist. Bei der bekannten Vorrichtung ist vorgesehen, in dem Verteiler ggf. einen Temperatursensor anzuordnen, der die Temperatur der abzufüllenden Flüssigkeit erfaßt und diese an eine Steuereinrichtung als Eingangsgröße weiterleitet. Insbesondere bei Flüssigkeiten, deren Viskosität stark temperaturabhängig ist, kann dadurch mittels einer entsprechenden Änderung der Ansteuerzeit der Dosierventile die Abfüllgenauigkeit erhöht werden. Es hat sich jedoch beim Dosieren kleiner Füllmengen herausgestellt, daß die Temperaturmessung im Verteiler in bezug auf eine etwaige Änderung der Ansteuerzeiten der Dosierventile und somit die Füllgenauigkeit nicht mehr ausreichend genau ist. Dies rührt daher, daß sich die Temperatur der abzufüllenden Flüssigkeit auf ihrem Weg vom Verteiler zu den Behältern ändert, so daß eine im Verteiler erfasste Temperatur nicht repräsentativ für die Temperatur der Flüssigkeit beim eigentlichen Dosieren ist.

Aufgabe der Erfindung ist es daher, eine gattungsgemäße Vorrichtung zum Dosieren und Abfüllen einer Flüssigkeit in Verpackungsbehälter derart weiterzubilden, daß sie beim Abfüllen kleiner Flüssigkeitsmengen (gemeint sind hier insbesondere Flüssigkeitsmengen kleiner zehn Milliliter) eine höhere Abfüllgenauigkeit aufweist. Diese Aufgabe wird durch Merkmale des Anspruchs 1 gelöst. Weitere vorteilhafte Weiterbildungen der erfindungsgemäßen Vorrichtung ergeben sich aus den Unteransprüchen.

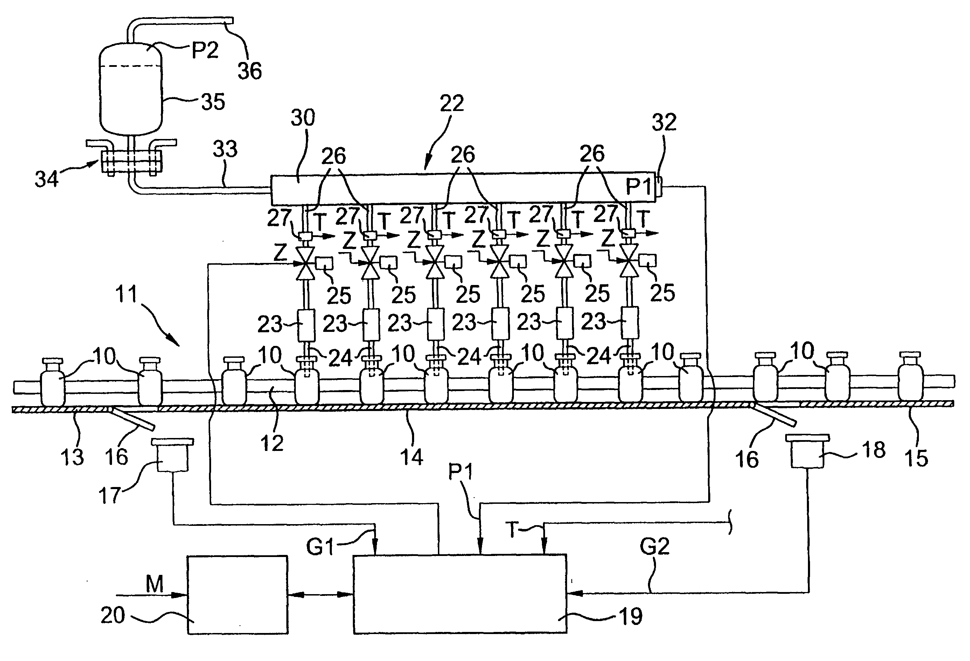

Ein Ausführungsbeispiel der Erfindung ist in der Zeichnung dargestellt, die eine Vorrichtung zum Dosieren und Abfüllen einer Flüssigkeit in Verpackungsbehälter in schematischer Ansicht zeigt, und in der nachfolgenden Beschreibung näher erläutert wird.

Die Vorrichtung zum Dosieren und Abfüllen einer Flüssigkeit in Verpackungsbehälter 10 hat eine Fördereinrichtung 11, mit der Verpackungsbehälter 10, wie beispielsweise Ampullen oder Vials, hintereinander angeordneten Behandlungsstationen zugeführt werden. Die Fördereinrichtung 11 weist eine Transportschnecke 12 zum taktweisen oder kontinuierlichen Transport der Verpackungsbehälter 10 auf. Die Verpackungsbehälter 10 stehen und gleiten auf Schienenstücken 13 bis 15. Zwischen den Schienenstücken 13 und 14 bzw. 14 und 15 ist jeweils eine über eine Ausschleußeinrichtung 16 ansteuerbare Wägeeinrichtung 17, 18 für jeweils einen Verpackungsbehälter 10 angeordnet, von denen die eine Wägeeinrichtung 17 das Tara-Gewicht G1 und die andere Wägeeinrichtung 18 das Brutto-Gewicht G2 des Verpackungsbehälters 10 erfaßt und einer Steuereinrichtung 19 als Eingangsgröße zuführt. Die Wägeeinrichtungen 17, 18 können anstelle innerhalb der Abfüllanlage selbstverständlich auch außerhalb dieser angeordnet sein.

In der Steuereinrichtung 19 sind beispielsweise produktspezifische Daten, wie der Viskositätsverlauf der Flüssigkeit über der Temperatur sowie Daten der Vorrichtung abgespeichert. Mit der Steuereinrichtung 19 ist eine Ein/Ausgabeeinheit 20 verbunden, über die insbesondere eine Sollfüllmenge M bzw. ein Sollfüllgewicht der Verpackungsbehälter 10 an die Steuereinrichtung 19 eingegeben werden kann.

Oberhalb der Fördereinrichtung 11 ist im Bereich des Schienenstücks 14 eine Abfülleinrichtung 22 angeordnet. Die Abfülleinrichtung 22 umfaßt beim taktweisen Transport der Verpackungsbehälter 10 eine der Anzahl der pro Fördertakt zu füllenden Verpackungsbehälter 10 entsprechende Anzahl von Abfüllköpfen 23, beispielsweise sechs, die jeweils eine aufund abbewegbare hohle Füllnadel 24 haben. Jeder Abfüllkopf 23 ist mit je einem von der Steuereinrichtung 19 einzeln ansteuerbaren Dosierventil 25 für die Flüssigkeit gekoppelt. Die Dosierventile 25 sind über kurze Leitungen 26 mit einem gemeinsamen, rohrförmigen Verteiler 30 verbunden, in dem ein Flüssigkeitsdruck P1 herrscht. Der Verteiler 30 ist seinerseits über eine Leitung 33 und eine Schnellspanneinrichtung 34 mit einem Produkt-Vorratsbehälter 35 verbunden. Das Druckgefälle zwischen dem mit der Flüssigkeit vollständig gefüllten Verteiler 30 und den einzelnen Dosierventilen 25 ist beispielsweise durch eine Anordnung der Dosierventile 25 in gleichem vertikalem Abstand zum Verteiler 30 stets gleich groß.

In dem Vorratsbehälter 35 befindet sich vorteilhafterweise die Menge an Flüssigkeit, die während einer Produktionsschicht zur Abfüllung der Verpackungsbehälter 10 benötigt wird. Dadurch ergibt sich, daß die Füllhöhe im Vorratsbehälter 35 bei jedem Abfüllzyklus nur in sehr geringem Maße abnimmt. Der Vorratsbehälter 35 ist über eine Druckleitung 36 mit einem Gasdruck P2 beaufschlagt.

Vorteilhafterweise besteht dabei eine Beeinflussung zwischen den Drücken P1 und P2, so daß P2 beispielseise von der Steuereinrichtung 19 so geregelt wird, daß sich stets ein Druck P1 einstellt, dessen Toleranz zum Beispiel +/- 0,05 bar beträgt. Somit können verschiedene Anordnungen des Vorratsbehälters 35 an der Vorrichtung sowie ein sinkender Flüssigkeitsspiegel in dem Vorratsbehälter 35 ausgeglichen werden.

Es ist jedoch auch möglich, den Druck P2 für sich genommen annähernd konstant zu regeln, wodurch der Druck P1 mit sinkendem Flüssigkeitspegel nach und nach abnimmt. Durch den Druck P2 wird generell ein höherer Druck der Flüssigkeit an den Dosierventilen 25, und damit eine größere Abflußgeschwindigkeit aus dem Vorratsbehälter 35 ermöglicht, was insbesondere bei hochviskosen Flüssigkeiten das Fließverhalten begünstigt.

Im Verteiler 30 ist ein Drucksensor 32 zur Erfassung des Flüssigkeitsdruckes P1 angeodnet. Der Drucksensor 32 ist mit der Steuereinrichtung 19 verbunden.

Erfindungswesentlich ist, daß in wenigstens einer Leitung 26 zwischen dem Verteiler 30 und dem zugeordneten Dosierventil 25 ein Temperatursensor 27 zur Erfassung der in der Leitung 26 herrschenden Flüssigkeitstemperatur T angeordnet ist. Je näher der Temperatursensor 27 am Dosierventil 25 plaziert ist, desto genauer kann dieser die Temperatur T der Flüssigkeit zum Zeitpunkt des Durchströmens der Flüssigkeit durch das Dosierventil 25 bestimmen. Der Temperatursensor 27, der bevorzugt als PT 100, Thermoelement oder Pyrometer ausgebildet ist, ist mit der Steuereinrichtung 19 verbunden und leitet dieser die Temperatur T als Eingangsgröße zu.

Im dargestellten Ausführungbeispiel ist jedes der Dosierventile 25 mit einem separaten Temperatursensor 27 in seiner zugeordneten Leitung 26 ausgestattet. Es ist jedoch auch möglich, nur einzelne, repräsentativ ausgewählte Dosierventile 25 oder jeweils eine oder mehrere Gruppen von Dosierventilen 25 mit Temperatursensoren 27 auszurüsten. Dies ist im Einzelfall anhand der vorgegebenen geometrischen Einbauverhältnisse der Dosierventile 25 und der Leitungen 26 zu entscheiden. Dabei sind u.a. unterschiedliche Lägen der Leitungen 26 oder das Vorbeiführen von Leitungen 26 an erwärmten oder gekühlten Bauteilen der Vorrichtung zu berücksichtigen, die unterschiedliche Temperaturänderungen der Flüssigkeit auf ihrem Weg vom Verteiler 30 zum Dosierventil 25 zur Folge haben.

### Die oben beschriebene Vorrichtung arbeitet wie folgt:

Die Verpackungsbehälter 10 werden von der Transportschnecke 12 der Abfülleinrichtung 22 taktweise zugefördert. Sobald die Verpackungsbehälter 10 unter den ihnen zugeordneten Abfüllköpfen 23 positioniert sind, werden die Füllnadeln 24 der Abfüllköpfe 23 abgesenkt und in die Verpackungsbehälter 10 eingeführt. Gleichzeitig beginnt durch eine entsprechende Ansteuerung der Dosierventile 25 durch die Steuereinrichtung 19 das Abfüllen der Soll-Füllmenge M in die Verpackungsbehälter 10.

Zur Berechnung einer Ansteuerzeit Z für die Dosierventile 25 zum Dosieren der Soll-Füllmenge M durch die Steuereinrichtung 19 werden sowohl die von dem oder den Temperatursensoren 27 gemessenen Temperaturen T, als auch der von dem Drucksensor 32 ermittelte Druck P1 zugrundegelegt. Dabei ist zu beachten, daß der in der Nähe der Dosierventile 25 im Verteiler 30 gemessene Druck P1 einen Gesamtdruck der Flüssigkeit darstellt, bestehend aus dem Gasdruck P2 und dem hydrostatischen Druck der Flüssigkeitssäule über dem Drucksensor 32. Da die Geometrie der vorrichtung, und damit auch das Druckgefälle zwischen dem Drucksensor 32 und den Dosierventilen 25 bekannt und in der Steuereinrichtung 19 abgespeichert ist, erfolgt somit allein mit dem Druckwert P1 und den bekannten Formfaktoren der Dosierventile 25 sowie den Flüssigkeitsparametern eine exakte Berechnung der Ansteuerzeit Z der Dosierventile 25. Insbesondere wird durch den bzw. die Temperatursensoren 27 auch die unterschiedliche Viskosität bei unterschiedlichen Temperaturen T der Flüssigkeit bei der Berechnung der Ansteuerzeit Z berücksichtigt und die Ansteuerzeit Z der Dosierventile 25 individuell oder gruppenweise entsprechend angepasst.

Ist die durch die Ansteuerzeit Z bestimmte Soll-Füllmenge M in die Verpackungsbehälter 10 eingebracht, so werden die Füllnadeln 24 durch die Abfüllköpfe 23 wieder aus den Verpackungsbehältern 10 herausgehoben. Anschließend werden die Verpackungsbehälter 10 durch die Förderschnecke 12 taktweise einer anderen Bearbeitungsstation, beispielsweise einer Verschließstation, zugefördert. Gleichzeitig wiederholt sich für neu in die Vorrichtung geförderte Verpackungsbehälter 10 der Vorgang wie oben beschrieben.

Um die exakte Dosierung der Flüssigkeitsmenge und damit der Soll-Füllmenge M durch die Vorrichtung zu kontrollieren beziehungsweise zu regeln, werden stichprobenartig über die Ausschleußeinrichtungen 16 einzelne Verpackungsbehälter 10 entnommen und den Wägeeinrichtungen 17, 18 zugeführt. Die dosierte Flüssigkeitsmenge wird von der Steuereinrichtung 19 als Differenz des Brutto-Gewichts G2 und des Tara-Gewichts G1 errechnet. Dabei ist es mit Hilfe der sogenannten statistischen Prozeßkontrolle (SPC) möglich, beim Unteroder Überschreiten von definierten Eingriffsgrenzen, beispielsweise der Flüssigkeitsmenge, aber auch des Tara-Gewichts G1 der Verpackungsbehälter 10, von der Steuereinrichtung 19 eine entsprechend korrigierte Ansteuerzeit Z der Dosierventile 25 zu ermitteln. Selbstverständlich kann anstelle zweier Wägeeinrichtungen 17, 18 auch nur eine einzige Wägeeinrichtung verwendet werden. Diese kann auch manuell mit Verpackungsbehältern 10 beschickt werden, wesentlich ist lediglich, daß auf diese Weise die eindosierte Flüssigkeitsmenge bestimmt werden kann und diese der Steuereinrichtung 19 zugeführt wird.

Ist der Vorratsbehälter 35 nach Ablauf einer Produktionsschicht leer, oder soll eine andere Produktcharge verwendet werden, so kann durch einfaches Ab- bzw. Ankoppeln eines anderen Vorratsbehälters 35 mittels der Schnellspanneinrichtung 34 die Betriebsbereitschaft der Vorrichtung wieder hergestellt werden. Es ist lediglich das Anschließen der Druckleitung 36 für den Gasdruck P2 an den Vorratsbehälter 35 notwendig.

Bei dem oben beschriebenen Ausführungsbeispiel wurden der bzw. die Temperatursensoren 27 in den Leitungen 26 angeordnet, ohne den genauen Einbauort zu spezifizieren. Aus der Erkenntnis, daß zum Berechnen der Ansteuerzeit Z der Dosierventile 25 möglichst die exakte Temperatur der Flüssigkeit beim Durchströmen der Dosierventile 25 zugrundegelegt werden sollte ergibt sich, falls es die Einbauverhältnisse zulassen, den bzw. die Temperatursensoren 27 möglichst nahe an dem bzw. den Dosierventilen 25 zu plazieren.

## Patentansprüche

1. Vorrichtung zum Dosieren und Abfüllen einer Flüssigkeit in Verpackungsbehälter (10), mit einem von einem bestimmten Gasdruck (P2) beaufschlagten Produktvorratsbehälter (35), der über einen Verteiler (30), von dem Verbindungsleitungen (26) ausgehen, mit Füllventilen (25) verbunden ist, wobei die Füllventile (25) zum Dosieren einer vorgegebenen Füllmenge (M) von einer Steuereinrichtung (19) unter Berücksichtigung eines von einem im Verteiler (30) angeordneten Drucksensor (32) erfaßten Drucks (P1) geöffnet und geschlossen werden, sowie wenigstens einem Temperatursensor (27) zum Erfassen der Temperatur (T) der Flüssigkeit zur Beeinflussung der Ansteuerzeit (Z) der Füllventile (25) durch die Steuereinrichtung, **dadurch gekennzeichnet, daß** der wenigstens eine Temperatursensor (27) in einer der Verbindungsleitungen (26) zwischen dem Verteiler (30) und dem entsprechenden Füllventil (25) angeordnet ist.

2. Vorrichtung nach Anspruch 1, **dadurch gekennzeichnet, daß** der wenigstens eine Temperatursensor (27) in unmittelbarer Nähe des Füllventils (25) angeordnet ist.

3. Vorrichtung nach Anspruch 1 oder 2, **dadurch gekennzeichnet, daß** in jeder Verbindungsleitung (26) ein Temperatursensor (27) angeordnet ist, so daß die Ansteuerzeit (Z) jedes Füllventils (25) auf Grundlage der von dem zugeordneten Temperatursensor (27) erfassten Temperatur (T) individuell erfolgt.

## Claims

1. Device for dosing and filling a liquid into packaging containers (10), with a product storage container (35) which is subject to a specific gas pressure (P2) and is connected to filling valves (25) via a distributor (30) from which connection lines (26) issue, said filling valves (25), for dosing a predetermined filling amount (M), being opened and closed by a control device (19) on the basis of a pressure (P1) detected by a pressure sensor (32) arranged in the distributor (30), and with at least one temperature sensor (27) for detecting the temperature (T) of the liquid in order to influence the time of actuation (Z) of the filling valves (25) by the control device, **characterized in that** the at least one temperature sensor (27) is arranged in one of the connection lines (26) between the distributor (30) and the corresponding filling valve (25).

2. Device according to Claim 1, **characterized in that** the at least one temperature sensor (27) is arranged in immediate proximity to the filling valve (25).

3. Device according to Claim 1 or 2, **characterized in that** a temperature sensor (27) is arranged in each connection line (26), so that the actuation time (Z) of each filling valve (25) is determined individually on the basis of the temperature (T) detected by the associated temperature sensor (27).

## Revendications

1. Dispositif pour le dosage et de remplissage d'un liquide dans des récipients d'emballage (10) comportant un récipient d'approvisionnement en produit (35) auquel est appliquée une certaine pression de gaz (P2), qui est relié avec des vannes de remplissage (25) au travers d'un répartiteur (30), duquel partent des canalisations de liaison (26), les vannes de remplissage (25) étant fermées et ouvertes par un dispositif de commande (19) pour doser une quantité de remplissage (M) prédéterminée en prenant en compte une pression (P1) détectée par un capteur de pression (32) disposé dans le répartiteur (30), ainsi qu'au moins un capteur de température (27) pour détecter la température (T) du liquide pour influer sur la durée de commande (Z) des vannes de remplissage (25) par le dispositif de commande,
**caractérisé en ce que**
le capteur de température (27), dont au moins un existe, est disposé dans l'une des canalisations de liaison (26) entre le répartiteur (30) et la vanne de remplissage (25) correspondante.

2. Dispositif selon la revendication 1,
**caractérisé en ce qu'**
au moins un capteur de température (27) est disposé à proximité immédiate de la vanne de remplissage (25).

3. Dispositif selon la revendication 1 ou 2,
**caractérisé en ce qu'**
un capteur de température (27) est disposé dans chaque canalisation de liaison (26) si bien que la durée de commande (Z) de chaque vanne de remplissage (25) s'effectue individuellement sur la base de la température T détectée par le capteur de température (27) associé.
